Europäisches Patentamt

European Patent Office

Office européen des brevets

(11) Publication number: **0 041 389**
**B1**

## EUROPEAN PATENT SPECIFICATION

(45) Date of publication of patent specification: **17.04.85**

(51) Int. Cl.⁴: **H 02 G 15/18**

(21) Application number: **81302413.0**

(22) Date of filing: **01.06.81**

(54) **Wraparound heat recoverable sleeves.**

(30) Priority: **02.06.80 US 155816**

(43) Date of publication of application:
**09.12.81 Bulletin 81/49**

(45) Publication of the grant of the patent:
**17.04.85 Bulletin 85/16**

(84) Designated Contracting States:
**AT BE CH DE FR IT LI NL SE**

(56) References cited:
**DE-A-2 851 548**
**FR-A-2 267 358**
**GB-A-2 019 120**
**US-A-3 891 790**

(73) Proprietor: **RAYCHEM CORPORATION**
**300 Constitution Drive**
**Menlo Park California 94025 (US)**

(72) Inventor: **Kinsch, Michael John**
**Rt. 1, Box 313 H Half Moon Bay**
**California 94019 (US)**
Inventor: **Ramirex, Eleazar Ferrer**
**4356 Stone Canyon Drive**
**San Jose California 95136 (US)**
Inventor: **Triplett, James Thomas**
**2801 Superior Drive Livermore**
**California 94550 (US)**

(74) Representative: **Benson, John Everett et al**
**Raychem Limited Intellectual Property Law**
**Department Swan House 37-39, High Holborn**
**London WC1 (GB)**

Courier Press, Leamington Spa, England.

## Description

This invention relates to heat-recoverable wraparound sleeves and to the installation of such sleeves on elongate substrates to form a sealed leak-proof enclosure around a portion of the elongate substrate.

Wraparound heat-recoverable, or heat-shrinkable, polymeric sleeves are frequently used to protect portions of elongate substrates, such as cables. Wraparound heat-recoverable sleeves generally comprise a heat-shrinkable polymeric sheet which can be wrapped around the elongate substrate. The longitudinal edges of the sleeve are held together by suitable means and heat is applied to cause the sleeve to shrink into intimate contact with the substrate. The sleeve can be used, for example, over splices between cables or over sections of the cable where additional protection is desired, for example where the cable insulation has been damaged or removed for some reason. The heat-shrinkable sleeves are generally coated on one side thereof, the side which becomes the inner surface of the sleeve, with a heat activatable adhesive, such as a hot melt adhesive or the like. Application of heat to cause the sleeve to shrink into contact with the substrate also activates the adhesive so that the sleeve becomes bonded to the substrate.

During the heat-recovery or heat-shrinking step, the longitudinal edges of the sleeve must be secured together. Several ways of retaining the edges together are taught in the art. A particularly useful approach is that disclosed in U.S. Patent No. 3,455,336 to Ellis. The heat-shrinkable sleeve is provided with an integral rail along each longitudinal edge and when the longitudinal edges are brought together the rails can be utilized to hold the edges together. This is usually accomplished by means of a channel placed over the abutting rails. If desired, one of the rails can be set back from the longitudinal edge to form a flap which provides an area of overlap when the edges are brought together. Other means for holding a wraparound heat-recoverable sleeve together during the heat-recovery step are disclosed in the art. See, for example, U.S. Patent Nos. 3,379,218 to Conde, 3,530,898 to Wilson and 3,574,313 to Tanaka. It is also possible to overlap the longitudinal edges and hold them together with an adhesive. This is generally not as satisfactory as, for example, the rail and channel system described above, as most contact adhesives are not strong enough to withstand the stresses created during heat-recovery of the sleeve.

Heat-recoverable sleeves may be used for sealing branch-off joints between substrates such as telecommunications cables. GB—A—2019120 discloses a method in which a clip formed as a trident is positioned over an end of the sleeve at an end thereof so as to form two terminal conduits, substrates are positioned within the conduits, and heat is applied so as to effect shrinkage and form the desired seal. The central leg of the trident clip may be coated with an adhesive to aid sealing of the crutch region of the branch-off between the substrates. The adhesive on the clip may be pigmented so that its diffusion into the coallescence with a clear hot-melt lining of the sleeve may be noted to indicate that sufficient heat has occurred.

In the installation of heat-recoverable sleeves of this type, the heat applied should be adequate to activate the adhesive over the entire inner surface of the sleeve. It has been found in practice that sufficient heat is not always applied during installation with the result that the protective enclosure formed by the heat-recovered sleeve leaks. Use of a thermochromic paint on at least a portion of the outer surface of the sleeve to detect when the sleeve has reached a particular temperature is one proposed solution to this problem.

It has been observed that in installing a wraparound sleeve of the type which includes a longitudinal rail closure means or which includes an area of overlap when the longitudinal edges are brought together, the adhesive immediately under the rail or overlap takes longer to heat. As a result if sufficient heat is not applied this area is likely not to bond to the substrate. It has been found that if this area is coated with a strip of colored or pigmented heat flowable adhesive, adequate heating of the sleeve is readily detected. When sufficiently heated, the pigmented adhesive flows from the ends of the sleeve and is visible to the installer.

Thus, one aspect of this invention comprises a heat-recoverable wraparound sleeve comprising an elongate, heat-recoverable flexible sheet coated on one surface with a heat-recoverable adhesive, said sheet having opposed longitudinal edges and being capable of being positioned about an elongate substrate such that the longitudinal edges of said sheet form an area of greater thickness than said sheet thereby facilitating retaining said edges together in intimate contact along their length; characterised in that at least one strip of adhesive, positioned when said sheet is placed about an elongate substrate on the innermost surface of said area of greater thickness, is capable of flowing upon application of heat and is pigmented.

The heat-recoverable flexible sheet is made of a material capable of having the property of plastic or elastic memory imparted thereto which is heated to above its crystalline melting temperature and expanded under pressure to configuration greater than its normal configuration and then cooled while kept under pressure. A heat recoverable article treated in this manner will retain its expanded position until it is again heated to its crystalline melting temperature at which time it will recover to its original shape. Examples of such heat-recoverable materials may be found in Currie Patent No. 2,027,962 and Cook et al. Patent No. 3,086,242. Polymeric materials which have been cross-linked by chemical means or by irradiation, for example, with high energy electrons or nuclear radiation, are preferred for use in preparing the heat-recoverable flexible sheet. Non-crystalline polymeric materials exhibiting the property of plastic or elastic memory, such as polyurethane, ionomers, etc. can also be used, if desired.

The inner surface of the heat-recoverable flexible sheet is coated with a heat activatable adhesive so that an adhesive bond is formed between the heat-recovered sleeve and the substrate after the sheet has been installed. The adhesive is preferably a hot melt adhesive but other heat activatable adhesives, such as heat activatable mastics and the like, can be used. Hot melt adhesives for this use are well known. Particularly suitable adhesives are those described in U.S. Patents No. 3,983,075 to Penneck, 4,018,733 to Lopez et al., 4,117,027 to Johnson et al. and 4,181,775 to Corke. Such adhesives typically comprise polyamides of relatively low molecular weight, various olefin polymers or copolymers, waxes, tackifiers, antioxidants, etc. The particular adhesive used will depend in part by the material used for the heat-recoverable sleeve and the material or materials forming the outermost surface of the substrate. The heat-recoverable sleeve can bond directly to the substrate such as a metal pipe or conduit, or to an insulation layer as is generally found on an electrical cable. A protective casing such as a metal inner shell as described in U.S. Patent No. 4,142,592 to Brusselmans can be used. The wraparound sleeves bond to this inner shell as well as to the underlying substrate.

The adhesive is generally applied to that side of the heat-recoverable flexible sheet which becomes the inner surface of the sleeve on installation. The adhesive can be applied by conventional techniques such as extrusion coating, laminating, brushing and other coating procedures. To ensure creation of a leak proof seal between the recovered sleeve and substrate, the adhesive is coated substantially uniformly over the entire surface. In accordance with this invention at least one strip of adhesive applied to the inner surface under the area of the sheet, generally the flap or rail area, which on installation has the greatest thickness will be pigmented. This strip of adhesive can be applied by any of the same conventional techniques. The strip can extend along the entire length of this area or, alternatively, smaller strips can be applied to the inner surface adjacent the ends of the sheet. The pigmented adhesive is preferably of the same adhesive formulation as the adhesive coated over the entire inner surface. However, the pigmented adhesive can be of any formulation which is compatible with the other coated on the surface. For example, it may be desirable to use an adhesive having a higher flow temperature than the first adhesive so that greater heat will be required to cause the pigmented adhesive to flow thereby providing greater assurance that adequate heat has been applied to activate the adhesive over the entire inner surface of the sleeve. This in turn provides that the sleeve will be completely bonded to the substrate forming a leak proof enclosure.

In a preferred embodiment the heat-recoverable flexible sheet is provided with a pair of closure rails. One of the rails is along one longitudinal edge and the other is set back from the other longitudinal edge to provide a flap. During installation, the rails are held together by means of a channel. In this case, the pigmented adhesive is placed on the inner surface of the sheet under the rail set back from the longitudinal edge, since this will be the innermost surface under the rails when the sleeve is installed. In another preferred embodiment, the longitudinal edges of the sheet are overlapped and held in place with a contact adhesive during the installation and heat-recovery process. In this case the pigmented adhesive is placed on the inner surface of the sheet adjacent the longitudinal edge which will be innermost during installation.

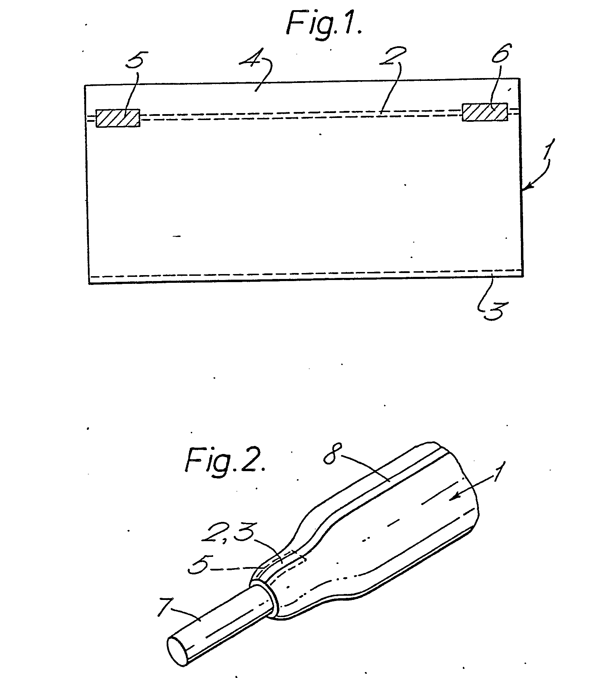

Turning now to the drawings, in Figure 1, a heat-shrinkable sheet, 1, of cross-linked polyethylene is provided with a pair of rails, 2 and 3, which abut one another when the sheet is wrapped around a substrate during installation. Rail, 2, is offset from the edge of the sheet forming a flap, 4. A channel (not shown) slides over the abutting rails to hold them closed during installation. The inner surface, that is the surface shown in Figure 1, is coated over its entire surface with a hot melt adhesive composition of the type disclosed in the above-mentioned U.S. Patent to Corke. Strips, 5 and 6, are of pigmented adhesive of the same adhesive formulation, and containing 0.06% of a violet pigment (Monostral 899D commercially available from E. I. duPont de Nemours). The strips are placed under the rail, 2, and flap, 4. During installation of the sheet as a wraparound sleeve, heat will cause the pigmented adhesive to flow beyond the open ends of the sleeve.

Figure 2 illustrates the heat-recoverable sheet, 1, of Figure 1 after it has been installed around substrate, 7. Rails, 2 and 3, are held together during installation by channel, 8. Strip, 5, of pigmented adhesive is on the innermost surface of the sheet, 1, adjacent the end of the sheet.

**Claims**

1. A heat-recoverable wraparound sleeve (1) comprising an elongate, heat-recoverable flexible sheet coated on one surface with a heat-activatable adhesive, said sheet having opposed longitudinal edges and being capable of being positioned about an elongate substrate (7) such that the longitudinal edges of said sheet form an area of greater thickness than said sheet thereby facilitating retaining said edges together in intimate contact along their length; characterised in that at least one (5, 6) strip of adhesive, positioned when said sheet is placed about an elongate substrate on the innermost surface of said area of greater thickness, is capable of flowing upon application of heat and is pigmented.

2. A wraparound sleeve (1) in accordance with Claim 1, characterised in that said area of greater thickness comprises a pair of rails (2, 3) extending the entire length of said sheet, said rails (2, 3) being capable of being held together by means of a channel (8).

3. A wraparound sleeve (1) in accordance with Claim 2, characterised in that one strip of pigmented adhesive extends the entire length of said rails.

4. A wraparound sleeve in accordance with Claim 2, characterised in that two strips of pigmented adhesive (5, 6) are positioned under said rail (2), each strip adjacent one end thereof.

5. A wraparound sleeve (1) in accordance with Claim 1, characterised in that said area of greater thickness comprises an area of overlap of said longitudinal edges.

6. A wraparound sleeve (1) in accordance with Claim 1, characterised in that said heat activatable adhesive and said pigmented adhesive are of the same adhesive formulation.

7. A wraparound sleeve (1) in accordance with Claim 6, characterised in that said adhesive formulation comprises a hot melt adhesive.

8. A method of protecting an elongate substrate (7) which comprises: positioning a heat-recoverable wraparound sleeve (1) coated on one surface with a heat-activatable adhesive around said substrate (7), said sleeve (1) comprising an elongate, heat-recoverable flexible sheet, said sheet having opposed longitudinal edges and being capable of being positioned about an elongate substrate such that the longitudinal edges of said sheet form an area of greater thickness than said sheet thereby facilitating retaining said edges together in intimate contact along their length, characterised in that at least one strip (5, 6) of adhesive, positioned when said sheet is placed about an elongate substrate (7) on the innermost surface of said area of greater thickness, is capable of flowing upon application of heat and is pigmented; applying heat to said sleeve (1); and discontinuing heating when said pigmented adhesive flows from the ends of said sleeve (1).

## Revendications

1. Manchon à enroulement thermorétractable (1) comprenant une feuille allongée, flexible et thermorétractable qui est revêtue sur une surface d'un adhésif activable par échauffement, ladite feuille comportant des bords longitudinaux opposés et pouvant être positionnée autour d'un substrat allongé (7) de manière que les bords longitudinaux de ladite feuille forment une zone d'épaisseur supérieure à celle de ladite feuille, en facilitant ainsi le maintien des bords en contact intime l'un avec l'autre sur leur longueur, caractérisé en ce qu'au moins une (5, 6) bande d'adhésif déposée quand ladite feuille est placée autour d'un substrat allongé sur la surface complètement intérieure de ladite zone de forte épaisseur, est capable de fluer lors de l'application de chaleur et est pigmentée.

2. Manchon à enroulement (1) selon la revendication 1, caractérisé en ce que ladite zone de plus grande épaisseur comprend une paire de baguettes (2, 3) s'étendant sur toute la longueur de ladite feuille, lesdites baguettes (2, 3) pouvant être maintenue assemblées au moyen d'un profilé en U (8).

3. Manchon à enroulement (1) selon la revendication 2, caractérisé en ce qu'une bande d'adhésif pigmenté s'étend sur toute la longueur desdites baguettes.

4. Manchon à enroulement selon la revendication 2, caractérisé en ce que deux bandes d'adhésif pigmenté (5, 6) sont placées en dessous de ladite baguette (2), chaque bande étant adjacente à une extrémité de celle-ci.

5. Manchon à enroulement (1) selon la revendication 1, caractérisé en ce que ladite zone de plus grande épaisseur comprend une zone de recouvrement desdits bords longitudinaux.

6. Manchon à enroulement (1) selon la revendication 1, caractérisé en ce que ledit adhésif activable par échauffement et ledit adhésif pigmenté ont la même composition d'adhésif.

7. Manchon à enroulement (1) selon la revendication 6, caractérisé en ce que ladite composition d'adhésif comprend un adhésif fusible à chaud.

8. Méthode de protection d'un substrat allongé (7), qui consiste à: positionner un manchon à enroulement thermorétractable (1) revêtu sur une surface d'un adhésif thermorétractable autour dudit substrat (7), ledit manchon (1) comprenant une feuille flexible thermorétractable allongée, ladite feuille comportant des bords longitudinaux opposés et pouvant être positionnée autour d'un substrat allongé de manière que les bords longitudinaux de ladite feuille forment une zone de plus forte épaisseur que ladite feuille en facilitant ainsi le maintien desdits bords en contact intime l'un avec l'autre sur leur longueur, caractérisé en ce qu'au moins une bande (5, 6) d'adhésif, déposée lorsque ladite feuille est placée autour d'un substrat allongé (7) sur la surface complètement intérieure de ladite zone de plus forte épaisseur, est capable de fluer lors de l'application de chaleur et est pigmentée; appliquer un échauffement audit manchon (1); et arrêter l'échauffement quand ledit adhésif pigmenté flue à partir des extrémités dudit manchon (1).

## Patentansprüche

1. Wärmeerholbare Umwickelmuffe (1), die ein längliches, wärmeerholbares, flexibles Flächenmaterial aufweist, das auf einer Fläche mit einem wärmeaktivierbaren Kleber beschichtet ist, wobei das Flächenmaterial gegenüberliegende Längsränder hat und um ein längliches Substrat (7) derart anordenbar ist, daß die Längsränder des Flächenmaterials einen Bereich mit größerer Dikke als das Flächenmaterial bilden, um das Zusammenhalten der Ränder in engem Kontakt längs ihrer Längserstreckung zu erleichtern, dadurch gekennzeichnet, daß wenigstens ein Streifen (5, 6) aus Kleber, der sich, wenn das Flächenmaterial um ein längliches Substrat gelengt wird, auf der zu innerst liegenden Fläche des Bereichs mit größerer Dicke befindet, fähig ist, bei Wärmeeinwirkung zu fließen, und der pigmentiert ist.

2. Umwickelmuffe (1) nach Anspruch 1, dadurch gekennzeichnet, daß der Bereich mit grösserer Dicke ein Paar Schienen (2, 3) aufweist, die sich über die gesamte Längserstreckung des Flächenmaterials erstrecken, und daß die Schienen (2, 3) mit Hilfe eines kanalförmigen Teils (8) zusammenhaltbar sind.

3. Umwickelmuffe (1) nach Anspruch 2, dadurch gekennzeichnet, daß sich ein Streifen aus pigmentiertem Kleber über die gesamte Länge der Schienen erstreckt.

4. Umwickelmuffe nach Anspruch 2, dadurch gekennzeichnet, daß zwei Streifen (5, 6) aus pigmentiertem Kleber unter der Schiene (2) angeordnet sind, wobei jeder Streifen in der Nähe eines Endes derselben vorgesehen ist.

5. Umwickelmuffe (1) nach Anspruch 1, dadurch gekennzeichnet, daß der Bereich mit grösserer Dicke einen Überlappungsbereich der Längsränder aufweist.

6. Umwickelmuffe (1) nach Anspruch 1, dadurch gekennzeichnet, daß der wärmeaktivierbare Kleber und der pigmentierte Kleber aus derselben Kleberzusammensetzung bestehen.

7. Umwickelmuffe (1) nach Anspruch 6, dadurch gekennzeichnet, daß die Klebermasse ein heißschmelzender Kleber ist.

8. Verfahren zum Schützen eines länglichen Substrats (7), bei dem eine wärmeerholbare Umwickelmuffe (1), die auf einer Fläche mit einem wärmeaktivierbaren Kleber beschichtet ist, um das Substrat (7) angeordnet wird, wobei die Muffe (1) ein längliches, wärmeerholbares, flexibles Flächenmaterial aufweist, das gegenüberliegende Längsränder hat und das um ein längliches Substrat derart anordenbar ist, daß die Längsränder des Flächenmaterials einen Bereich mit größerer Dicke als das Flächenmaterial bilden, um hierdurch das Zusammenhalten der Ränder in engem Kontakt längs ihrer Längserstreckung zu erleichtern, dadurch gekennzeichnet, daß wenigstens ein Streifen (5, 6) aus Kleber, der sich bei der Anordnung des Flächenmaterials um ein längliches Substrat (7) auf der innersten Fläche des Bereichs mit größerer Dicke befindet, fähig ist, bei der Einwirkung von Wärme zu fließen, und pigmentiert ist, daß Wärme auf die Muffe (1) aufgebracht wird und daß die Erwärmung unterbrochen wird, wenn der pigmentierte Kleber aus den Enden der Muffe (1) fließt.

## Fig.1.

## Fig.2.